# EUROPEAN PATENT APPLICATION

(11) **EP 4 723 520 A1**
(43) Date of publication of application: **08.04.2026**
(21) Application number: 24204101.0
(22) Date of filing: 02.10.2024
(51) Int. Cl.: H04L 1/00, H04L 5/00

(54) **CSI REPORTING METHOD AND APPARATUS THEREFOR**

(71) Applicant: Panasonic Intellectual Property Corporation of America, Torrance, CA 90504 (US)
(72) Inventor: LI, Hongchao, 63225 Langen (DE); HORIUCHI, Ayako, Osaka, 571-8501 (JP); KURUVATTI, Nandish, 63225 Langen (DE); SUZUKI, Hidetoshi, Osaka, 571-8501 (JP)
(74) Representative: Grünecker Patent- und Rechtsanwälte PartG mbB

(57) **Abstract**

A communication apparatus, comprising a transceiver which, in operation, receives a channel state information, CSI, report configuration indicating a CSI resource list including an ondemand synchronization signal block, OD-SSB, and monitors CSI resources included in the CSI resource list; and circuitry which, in operation, derives at least one CSI report quantity from received CSI resources, and performs CSI reporting according to the CSI report configuration, wherein the circuitry, in operation, determines whether or not the OD-SSB is available and performs at least one of the following operations, when it is determined that the OD-SSB is not available: (i) suspending the CSI reporting as long as the OD-SSB is not available, (ii) deactivating the CSI reporting, (iii) performing an error operation, (iv) performing CSI reporting, wherein respective CSI reports include CSI report quantities derived only from CSI resources other than the OD-SSB, and (v) performing CSI reporting, wherein portions of respective CSI reports dedicated for reporting a CSI report quantity derived from the OD-SSB include data other than said CSI report quantity.

## Description

### BACKGROUND

### 1. Technical field

The present disclosure is directed to methods, devices and articles in communication systems, such as 3GPP communication systems.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

Particularly, there is a need to specify procedures and signaling methods to support on-demand synchronization signal block, OD-SSB, operations for UEs in connected mode. For systems like LTE and NR, further improvements and options may facilitate efficient operation of the communication system as well as particular devices pertaining to the system.

### SUMMARY

One non-limiting and exemplary embodiment facilitates wireless communication using channel state information, CSI, reporting in in connection with on-demand synchronization signal blocks as CSI resource.

In an embodiment, the techniques disclosed herein feature: A communication apparatus, comprising a transceiver which, in operation, receives a channel state information, CSI, report configuration indicating a CSI resource list including an on-demand synchronization signal block, OD-SSB, and monitors CSI resources included in the CSI resource list; and circuitry which, in operation, derives at least one CSI report quantity from received CSI resources, and performs CSI reporting according to the CSI report configuration, wherein the circuitry, in operation, determines whether or not the OD-SSB is available and performs at least one of the following operations, when it is determined that the OD-SSB is not available: (i) suspending the CSI reporting as long as the OD-SSB is not available, (ii) deactivating the CSI reporting, (iii) performing an error operation, (iv) performing CSI reporting, wherein respective CSI reports include CSI report quantities derived only from CSI resources other than the OD-SSB, and (v) performing CSI reporting, wherein portions of respective CSI reports dedicated for reporting a CSI report quantity derived from the OD-SSB include data other than said CSI report quantity.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

In the following exemplary embodiments are described in more detail with reference to the attached figures and drawings.
- **Fig. 1**: shows an exemplary architecture for a 3GPP NR system, to which the improved procedures of the present disclosure may be applied;
- **Fig. 2**: illustrates a simplified and exemplary implementation of a set of synchronization signal blocks distributed in a half-frame;
- **Fig. 3**: illustrates a signaling diagram for CSI measurement and reporting;
- **Fig. 4**: illustrates a communication apparatus and a base station in a communication system;
- **Fig. 5**: shows exemplary functional structures of a circuitry of a communication apparatus and a circuitry of a base station;
- **Fig. 6**: illustrates the steps of a method for a communication apparatus according to embodiment 1;
- **Fig. 7**: illustrates further steps of a method for a communication apparatus according to embodiment 1;
- **Fig. 8**: illustrates the steps of a method for a communication apparatus according to embodiment 2;
- **Fig. 9**: illustrates the steps of a method for a communication apparatus according to embodiment 3;
- **Fig. 10**: illustrates the steps of a method for a communication apparatus according to embodiment 4;
- **Fig. 11**: illustrates the steps of a method for a communication apparatus according to embodiment 5;
- **Fig. 12**: illustrates the steps of a method for a communication apparatus according to embodiment 6;
- **Fig. 13**: illustrates the steps of a method for a communication apparatus according to embodiment 7;
- **Fig. 14**: illustrates the steps of a method for a communication apparatus according to embodiment 8;
- **Fig. 15**: illustrates the steps of a method for a communication apparatus according to embodiment 9;
- **Fig. 16**: illustrates the steps of a method for a communication apparatus according to embodiment 10;
- **Fig. 17**: illustrates the steps of a method for a communication apparatus according to embodiment 11;
- **Fig. 18**: illustrates the steps of a method for a communication apparatus according to a first variation of embodiment 11;
- **Fig. 19**: illustrates the steps of a method for a communication apparatus according to a second variation of embodiment 11; and
- **Fig. 20**: shows exemplary functional split options in 5G O-RAN.

### DETAILED DESCRIPTION

### 5G NR system architecture and protocol stacks

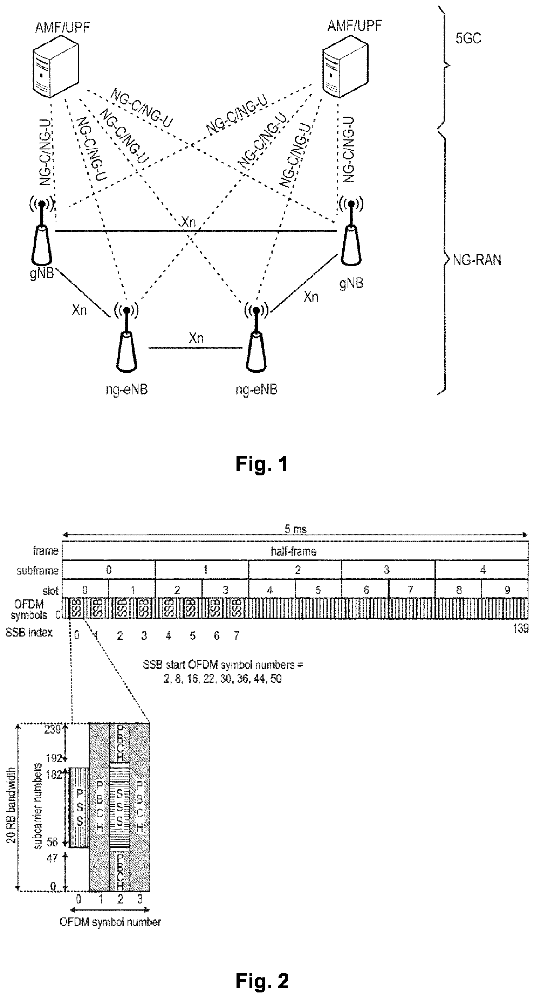

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4).

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v16.2.0, e.g. section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

### Synchronization Signal Block measurement timing configuration

NR has introduced the so-called synchronization signal block, SS block (SSB), which comprises a Primary Synchronization Signal (PSS), a Secondary Synchronization Signal (SSS), and a Physical Broadcast CHannel (PBCH) (in fact PBCH DMRS and PBCH data). The PSS and SSS can be used by UEs to find, synchronize to and identify a network. The PBCH carries a minimum amount of system information including an indication where the remaining broadcast system information is transmitted.

In LTE, these three signals were also used, the PSS, SSS, and PBCH, although not as being part of one SSB. The three SSB components are always transmitted together in NR, e.g. they have the same periodicity. A given SSB may be repeated within an SS burst set, which can be potentially used for a gNB beam-sweeping transmission. The SS burst set may be confined to a particular time period, such as a 5ms window (half-frame). For initial cell selection, the UE may assume a default SS burst set periodicity of 20 ms.

The 5G NR PSS is a Physical Layer specific signal to identify the radio frame boundary and is type of an m-sequence. The 5G NR SSS is also a Physical-Layer specific signal to identify the subframe boundary and is also an m-sequence. The PSS/SSS sequence is composed of complex values used by each element/sample of the sequence. Information on the current exemplary 5G implementation of the PSS and SSS is available from 3GPP TS 38.211 v17.4.0 sections 7.4.2.2 and 7.4.2.3, including the respective sequence generation and mapping to physical resources.

The time-frequency structure of an SS/PBCH block, carrying the SSS is described in the TS 38.211 section 7.4.3.1. In such an exemplary 5G implementation, in the time domain, an SS/PBCH block consists of 4 OFDM symbols, numbered in an increasing order from 0 to 3. The distribution of the PSS, SSS and PBCH signals within the SS/PBCH block is defined by Table 7.4.3.1-1.

In the frequency domain, an SS/PBCH block consists of 240 contiguous subcarriers, indexed with 0 to 239. The exact subcarriers to be used for each PSS, SSS and PBCH signal within the SS/PBCH block is also defined by Table 7.4.3.1-1.

A simplified and exemplary illustration of the SSB according to the above definitions is illustrated in **Fig. 2****,** which shows at the bottom part the PSS, SSS, and PBCH in the time and frequency domain.

The timing (OFDM symbols) at which the SS-blocks (see **Fig. 2**) are transmitted by the gNB can be defined differently. In particular, the first symbol indexes (within each half-frame with an SSB) with which a candidate SSB starts is determined according to 3GPP 38.213 v17.4.0, section 4.1 "Cell search". An example set of SSBs is illustrated in **Fig. 2**, assuming start OFDM symbols of 2, 8, 16, 22, 30, 36, 44, and 50 (case of SCS=30 kHz, and frequency > 3 GHz), wherein the relevant OFDM symbol numbering starts with 0 in a half frame. The number of SSBs in a set of SSBs can also be limited to a maximum Lmax. In one example, the SSB set can comprise 4, 8 or 64 SSBs.

The candidate SS/PBCH blocks in a half frame (e.g. termed a set of SSBs) are indexed in an ascending order in time from 0 to *Lmax* - 1. Correspondingly, each SSB within a set of SSBs is assigned a unique number (starting from 0 and increasing by 1).

The SSB set illustrated in **Fig. 2** shows a case where all the possible candidate SSBs are indeed transmitted by the base station. However, it is not required to transmit all SSBs. Rather, the gNB, based on some requirements, may select only some of those SSBs within a set of SSBs and transmit those. The SSBs that are actually transmitted by the SSB can be called the SSB pattern. The SSB pattern has basically the same characteristics as the corresponding set of SSBs, including the periodicity.

The gNB informs the UE about the SSB pattern, e.g. which SSBs are in fact transmitted and which are not. This can be done e.g. by the gNB transmitting an SSB bitmap, which defines the SSB pattern, wherein each bit of the SSB bitmap relates to one SSB and identifies whether said SSB is transmitted or not. The length of the SSB bitmap depends on the applicable SSB set, e.g. 4, 8, or 64 bits.

In brief, a set of candidate SSBs is configured for use by the gNB in the cell. Furthermore, among the set of candidate SSBs, the gNB can then select either all or fewer candidate SSBs to actually transmit, called an SSB pattern.

### On-demand SSB

In 5G NR, SSBs are transmitted periodically by the base station (gNB) to assist UEs in tasks such as cell search, timing acquisition, and frequency synchronization.

However, periodic transmission of SSBs in 5G NR can be inefficient, especially in scenarios like Internet of Things (loT) deployments, where devices may be in idle mode for extended periods, or in dense urban areas where network capacity must be carefully managed. To address these challenges, on-demand synchronization signal blocks (OD-SSBs) have been introduced as part of advanced research.

OD-SSBs are designed to reduce unnecessary signaling by allowing the network to transmit synchronization signals only when there is a demand. This "on-demand" approach is particularly useful in networks with sporadic traffic or when devices are predominantly in idle or sleep mode. Instead of continuously broadcasting SSBs at fixed intervals, the network can be more intelligent and transmit these signals in response to specific triggers, such as when a UE attempts to connect or requests synchronization. Further, the network may decide to transmit an SSB and trigger a UE to receive an on-demand SSB. This reduces power consumption for both the network and the UE, optimizes resource allocation, and minimizes interference.

### Reference Signals

Several different types of reference signals (RS) are used for 5G NR (see 3GPP TS 38.211 v17.4.0 section 7.4.1). At least the following reference signals are available in 5G NR:
- CSI-RS, Channel State Information Reference Signal, usable for channel state information acquisition and beam management
- PDSCH DMRS, DeModulation Reference Signal, usable for the PDSCH demodulation
- PDCCH DMRS, DeModulation Reference Signal, usable for the PDCCH demodulation
- PBCH DMRS, DeModulation Reference Signal, usable for the PBCH demodulation
- PTRS, Phase Tracking Reference Signal, usable for phase tracking the PDSCH,
- Tracking Reference Signal, usable for time tracking, also called "CSI-RS for tracking" (see TS 38.214)
- RIM reference signals
- Positioning reference signals

As a DL-only signal, the CSI-RS, which the UE receives, can be used by the UE to estimate the channel and to report channel quality information back to the gNB (assists the gNB in modulation coding scheme selection, resource allocation, beamforming, MIMO rank selection). The CSI-RS can be configured for periodic, aperiodic (e.g. DCI triggered), or semi-persistent transmission by the gNB. The CSI-RS also can be used for interference measurement (IM) and fine frequency/time tracking purposes. Specific instances of CSI-RS can be configured for time/frequency tracking and mobility measurements. During MIMO operations, NR may use different antenna approaches based on the carrier frequency. At lower frequencies, the system uses a modest number of active antennas for MU-MIMO and adds FDD operations. In this case, the UE may use the CSI-RS to calculate the CSI and report it back in the UL direction.

The CSI-RS is UE-specific; nonetheless, multiple users can share the same CSI-RS resource. In particular, a UE-specific configuration of a CSI-RS does not necessarily mean that a transmitted CSI-RS can only be used by a single device, rather the same set of CSI-RS resources can be separately configured for multiple devices, which means that a single CSI-RS can be shared among multiple devices.

A configured CSI-RS may correspond to up to 32 antenna ports, each corresponding to a channel to be sounded. Depending on the number of antenna ports, there can be a single-port CSI-RS or a multi-port CSI-RS. A single-port CSI-RS occupies a single resource element within a resource block in the frequency domain and one slot in the time domain. On the other hand, for a multi-port CSI-RS, multiple orthogonally transmitted per-antenna-port CSI-RS, share the overall set of resource elements assigned for the configured multi-port CSI-RS. The sharing can be based on combinations of two or more of:
- Code domain multiplexing (CDM), based on using different orthogonal patterns,
- Frequency domain multiplexing (FDM), based on using different subcarriers within an OFDM symbol, and
- Time domain multiplexing (TDM), based on using different OFDM symbols within a slot.

While the CSI-RS can be configured to occur anywhere in the resource block, in practice it is possible to impose some restrictions on the CSI-RS resource assignment so as to avoid collisions with other downlink physical channels and signals. As an example, the transmission of a configured CSI-RS can be such that it does not collide with a CORESET configured for the device, the DM-RS associated with the PDSCH transmissions and the SS block transmissions.

The 5G NR standard supports flexible CSI-RS configurations. In the time domain, the CSI-RS resource may start at any OFDM symbol of a slot and span 1, 2, or 4 OFDM symbols, e.g. depending on the number of configured antenna ports.

According to one example, system information signaling (e.g. one of the system information blocks) may provide the configuration of the TRS and/or the CSI-RS occasion(s) for idle and/or inactive UE(s). It may be possible that, in addition to system information, other signaling methods are supported to configure the TRS/CSI-RS occasions, e.g. dedicated RRC messages, e.g. the RRC release message.

In one exemplary 5G NR implementation, a table (see e.g. TS 38.211, table 7.4.1.5.3-1) defines a set of candidate CSI-RS configurations, wherein each candidate CSI-RS configuration defines a set of resource elements (within a slot) on which the reference signal is transmitted. The different CSI-RS configurations differ from one another, e.g. in the number of ports, in the density and/or the cdm-type (code division multiplexing type). The gNB can inform the UE which CSI-RS the gNB is currently transmitting, using the IE CSI-RS-ResourceMapping that configures the resource element mapping of a CSI-RS resource in the time- and frequency domain.

### UE measurements and measurement reporting

UE measurements are used for cell selection, cell reselection, power control calculation, mobility procedures and beam management. Measurements are performed for a measurement object. In the current L1 beam measurement framework, a measurement object, which refers to a set of RSs, e.g. SSBs and/or CSI-RS, is semi-statically configured by RRC.

A result of such a measurement may include, for example, a Reference Signal Received Power, RSRP, value or a Reference Signal Received Quality, RSRQ, value or a Signal-to-Noise and Interference Ratio, SINR, value. However, the present disclosure is not limited to said examples. Any other suitable result of a measurement may be used.

An UE performs a measurement and reports the measurement results to the serving gNB of the UE. To said end, the UE can be configured by its serving gNB with the necessary parameters and information. For example, the configuration of the UE for performing measurements and reporting the measurement results involves conceptually:
- The quantity or a set of quantities to be reported.
- The downlink resources for each cell on which measurements should be performed in order to derive the quantity or quantities to be reported.
- How the actual reporting is to be carried out, e.g. reporting timing and uplink channel to use for the reporting.

According to one example, the measurement and reporting can be e.g. based on the CSI reporting framework, which generally can be considered to involve two parts, one for configuration and another one for the triggering of the CSI reporting.

The *CSI-MeasConfig* IE is the highest-level IE for CSI configuration and configures not just L1-RSRP-related measurement/reporting for beam management, but also conventional CSI-related measurement/reporting (such as CQI) to determine proper MIMO precoding, modulation and coding, etc.

Mainly three types of lists are configured by the *CSI-MeasConfig* IE:
1) List of RS resource sets
   - Each RS resource set in the list contains one or multiple RS resources. E.g. multiple CSI-RS resources can be configured e.g. by a *NZP-CSI-RS-Resource* IE and then grouped into a RS resource set by a *NZP-CSI-RS-ResourceSet* IE. Other possible RS resource are defined by the IEs *CSI-IM-Resource,* and SSB-*Index.*
2) List of *CSI-ResourceConfig* lEs
   - Different *CSI-ResourceConfig* in the list can contain one or more different RS resource sets, chosen from List element 1). This may include *NZP-CSI-RS-ResourceSet, CSI-IM-ResourceSet,* and/or *CSI-SSB-ResourceSet,* respectively identified by suitable IDs (see e.g. *NZP-CSI-RS-ResourceSetId, CSI-IM-ResourceSetId,* and/or *CSI-SSB-ResourceSetId*)
3) List of CSI-ReportConfig lEs.
   - Different *CSI-ReportConfig* in the list configures different CSI report instance. This is the Information Element which links the reporting configuration of this *CSI-ReportConfig* (such as by PUCCH or PUSCH) to the measurement resource sets (i.e. one *CSI-ResourceConfig* in the above List element 2). *CSI-ResourceConfigID,* being included in the *CSI-ReportConfig* IE, identifies a *CSI-ResourceConfig* IE to be used.

Measurements and reporting can be carried out on a periodic, semi-periodic or aperiodic basis. The measurements results are reported by the UE to the gNB, e.g. as uplink control information on the PUCCH or the PUSCH. In one 5G compliant example, the CSI reporting is performed by the UE based on the definitions given in 3GPP TS 38.212 v17.4.0, in section 6.3.

In present 3GPP 5G systems, there are two types of reference signals that can be used for the measurements, the SSB (see above mentioned SSB-Index) and the CSI-RS (Channel State Information-Reference Signals; see above *NZP-CSI-RS-Resource* IE and *CSI-IM-Resource* IE). The SSB is always transmitted by the network and is not specific to a UE and is thus unflexible. For instance, the SSB can be used in connection with a comparatively wide beam. On the other hand, the CSI-RS can be specifically configured for a UE, and is quite flexible regarding when and how often it is transmitted (time domain) and regarding the frequency-domain resources. The CSI-RS can be used in connection with a comparatively narrow beam, because it can be configured for only one or a few UEs.

There are several reporting components of CSI in 5G NR (i.e. several different types of CSI), e.g. based on 3GPP TS 38.214 - section 5.2.1 thereof:
- CQI (Channel Quality Information)
- PMI (Precoding Matrix Indicator)
- CRI (CSI-RS Resource Indicator)
- SSBRI (SS/PBCH Resource Block Indicator)
- LI (Layer Indicator)
- RI (Rank Indicator)
- L1-RSRP, and/or
- Capability Index

One or more or a combination of different metrics can be reported by the UE. Generally, the metrics can be grouped into two types:
- L1-RSRP-related quantities (e.g. cri-RSRP and ssb-Index-RSRP, see later IE CSI-*Report Config)*
- CSI-related quantities (e.g. the rest from the IE *CSI-Report Config*)

The L1-RSRP-related quantities are new ones introduced for the first time in NR (Rel-15), and one of their purposes is to facilitate beam management. By contrast, the CSI-related quantities (such as CQI) are traditional ones, existing in LTE already. Those traditional CSI-related quantities can be used by the base station to choose e.g. the proper MIMO precoding, modulation and coding size, etc. to match the channel condition.

An exemplary implementation follows current definitions of the 5G 3GPP standards, such as defined in 3GPP TS 38.331, and may involve e.g. the following Information Elements (IE):
*CellGroupConfig, CSI-MeasConfig, CSI-ReportConfig, CSI-ResourceConfig, NZP-CSI-RS-Resource,* and *NZP-CSI-RS-ResourceSet.*

In particular, the Information Element (IE) *CSI-MeasConfig* and the Information Element CSI-*ReportConfig* indicate parameters of the CSI reporting framework usable by the UE to measure and then report the measurement results.

One possible following sequence of lEs for defining measurement and report according to the CSI framework includes:
- CellGroupConfig IE
   ∘ the ServingCellConfig IE of SpCellConfig or of SCellConfig
      ▪ CSI-MeasConfig IE
         • CSI-ResourceConfig IE
            ∘ NZP-CSI-RS-ResourceSet
               ▪ NZP-CSI-RS-Resource
            ∘ CSI-SSB-ResourceSet
               ▪ SSB-Index
            ∘ CSI-IM-ResourceSet
               ▪ CSI-IM-Resource
         • CSI-ReportConfig IE

Details for said framework are provided, for example, in 3GPP TS 38.331, section 6.3.2.

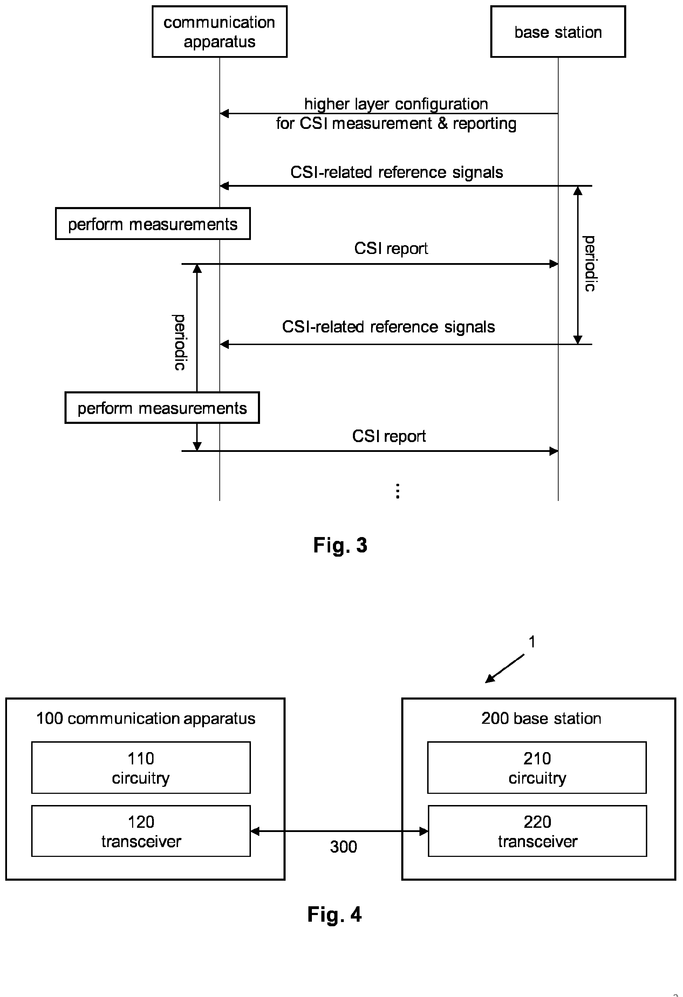

**Fig. 3** illustrates an exemplary and simplified signaling exchange for a measurement reporting, assuming a periodic transmission of the reference signals and the report. As apparent therefrom, the base station (e.g. gNB) configures the communication apparatus (e.g. UE) for the measurement and reporting (e.g. as described above). The communication apparatus follows this configuration for the measurement and reporting processing. The base station transmits the reference signals, and the communication apparatus performs the configured measurements on the received reference signals and generates the CSI report, which is then transmitted to the base station. This can be repeatedly performed, e.g. periodically as configured.

In the framework of the current L1 measurement, Periodic CSI (P-CSI) reporting can only use and be configured with periodic a CSI-RS (P-CSI-RS) resource or SSBs that are always, i.e. periodically, transmitted (also referred to as "always-on SSB"). Semi-Persistent CSI (SP-CSI) reporting, on the other hand, may use and be configured with semi-persistent CSI-RS (SP-CSI-RS), P-CSI-RS, and/or always-on-SSB. Further, Aperiodic CSI (AP-CSI) reporting may be configured with SP-CSI-RS, P-CSI-RS, always-on SSB, or Aperiodic CSI-RS (AP-CSI-RS). This approach is utilized in order to ensure that the RS resource is available for CSI reporting. That is, the RS resource should not be more dynamic than respective CSI reporting.

### Embodiments

The present disclosure addresses CSI reporting in the framework of OD-SSB as a CSI resource.

In the following, communication apparatuses (e.g. user equipments (UEs), loT devices, network nodes, and the like), base stations (e.g. scheduling devices, network nodes, intermediate nodes and the like) as well as procedures of communication will, particularly, be described for the new radio access technology envisaged for 5G mobile communication systems, but may also be used in LTE mobile communication systems, 6G mobile communication systems, and other wireless communication systems including wireless local area networks or the like. Different implementations and variants will be exemplified.

In general, it should be noted that many assumptions have been made herein so as to be able to explain the principles underlying the present disclosure in a clear and understandable manner. These assumptions are however to be understood as merely examples made herein for illustration purposes that should not limit the scope of the disclosure.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure.

For instance, a communication apparatus or mobile station or mobile node or user terminal or user equipment (UE) is a physical entity (physical node) within a communication network. One communication apparatus may have several functional entities. A functional entity refers to a software or hardware module that implements and/or offers a predetermined set of functions to other functional entities of the same or another communication appaatus or the network. Communication apparatuses may have one or more interfaces that attach the communication apparatus to a communication facility or medium over which communication apparatus can communicate. Similarly, a network entity may have a logical interface attaching the functional entity to a communication facility or medium over which it may communicate with other functional entities or correspondent communication apparatuses.

The term "base station" or "radio base station" or "network node" here refers to a physical entity within a communication network. As with the communication apparatus, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

The present disclosure provides a communication apparatus, a base station as well as corresponding methods and programs. For instance, an integrated circuit can control a process of a communication apparatus or base station.

As illustrated in **Fig. 4****,** a communication apparatus 100 and a base station 200 may communicate with each other over a wireless channel 300 in a wireless communication system 1. For instance, the communication apparatus 100 may be a NR user equipment, and the base station 200 may be a scheduling node such as an eNB, or a gNB in a NR wireless communication system. The communication system 1 may be a wireless communication system in accordance with the technical specifications of 5G, in particular a NR communication system. However, the present disclosure is not limited to 3GPP NR and may also be applied to other wireless or cellular systems.

**Fig. 4** illustrates a general, simplified and exemplary block diagram of a communication apparatus 100 and a base station 200. However, in general, a base station 200 may also be a terminal in case of a sidelink connection between two terminals. Moreover, in particular with respect to the use cases of URLLC; eMBB, and mMTC, the communication apparatus 100 may also be a sensor device, a wearable device, a connected vehicle, a controller of an automated machine in an industrial factory, or the like. Further, a communication apparatus 100 may be able to function as a relay between base station 200 and another communication device (e.g. the disclosure is not limited to communication "terminals" or user "terminals").

The communication apparatus 100 and base station 200 are communicating with each other over a (wireless) physical channel 300 respectively using their transceivers 120 (communication apparatus side) and 220 (base station side). Together, the base station 200 and the communication apparatus 100 form the communication system 1. The communication system 1 may further include other entities such as those shown in **Fig. 1****.**

As shown in **Fig. 4** (left-hand side), according to an exemplary embodiment, a communication apparatus 100 is provided. The communication apparatus 100 comprises a transceiver 120 and circuitry 110. The exemplary transceiver 120 in **Fig. 4** may include a receiver and/or a transmitter.

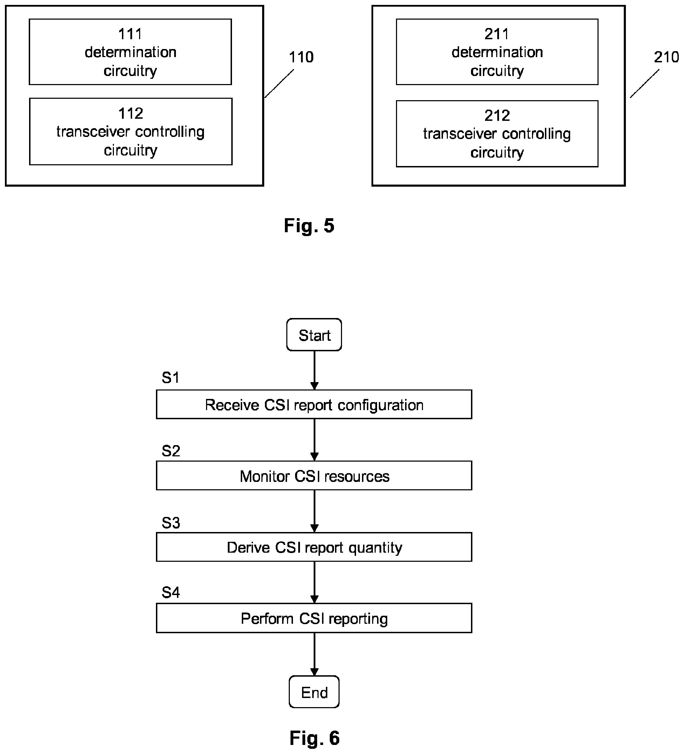

**Fig. 5** (left-hand side) shows an exemplary functional structure of the circuitry 110. In particular, the circuitry 110 may include determination circuitry 111 and transceiver controlling circuitry 112. The determination circuitry 111 may be configured to perform any of below-described determinations. The transceiver controlling circuitry 112 may control the transceiver 120 to perform respective operations.

As also shown in **Fig. 4** (right-hand side), according to an embodiment, a base station 200 is provided. The base station 200 comprises a transceiver 220 and a circuitry 210. The exemplary transceiver 220 in **Fig. 4** may comprise a transmitter and/or a receiver.

**Fig. 5** (right-hand side) shows an exemplary functional structure of the circuitry 210. In particular, the circuitry 210 may include determination circuitry 211 and transceiver controlling circuitry 212. The determination circuitry 211 may be configured to perform any of below-mentioned determinations. The transceiver controlling circuitry 212 may control the transceiver 220 to perform respective operations.

In the following description, an occasion may refer to a specific, determined, defined, indicated, configured, predetermined, or predefined time interval or specific, determined, defined, indicated, configured, predetermined, or predefined resources within a transmission schedule, during which a particular signal or message is transmitted and/or expected to be received, e.g. ensuring synchronized communication and efficient resource management between the network and user equipment. In other words, an occasion is a designated time period or designated resources when a specific signal or message is sent and/or anticipated to be received.

Further, a CSI resource may refer to any reference signal used by a communication apparatus 100 to obtain a CSI report quantity. That is, CSI resources may refer to the specific reference signals (e.g., CSI-RS and/or SSB) that a communication apparatus 100 may use to measure and report Channel State Information (CSI). Such CSI resources may be indicated in a CSI report configuration transmitted to the communication apparatus 100. For example, a CSI resource includes above-described reference signals (CSI-RSs), SSBs and OD-SSBs.

Further, CSI reporting refers to any operation performed by a communication apparatus 100, wherein the communication apparatus 100 transmits, to a base station 200, a signal including a measurement, which indicates a CSI report quantity. In other words, CSI reporting in wireless communications involves the communication apparatus 100 sending feedback about the channel conditions, such as signal quality and interference, to the network. The term "CSI reporting" or "performing CSI reporting" may involve monitoring occasions for reception of CSI reference signals, the derivation of CSI report quantities, and/or the transmission of a CSI report by a communication apparatus 100 to a base station 200.

Further, a CSI report quantity may be any measure provided by a communication apparatus in a CSI report indicating a quality of a radio channel. In other words, CSI report quantity refers to specific metrics or parameters, like signal strength, interference, or channel quality, that the communication apparatus 100 measures and reports to the base station 200 to help optimize communication strategies. A CSI quantity includes, for example, a Channel Quality Indicator, a reference signal received power (RSRP), signal to interference plus noise ratio (SINR) or the like.

Further, in the following, determinations as to whether an OD-SSB is available are described. An OD-SSB may be determined as being not available (off, deactivated), if it is turned off by any one of RRC signaling, MAC CE signaling, explicitly indicated by DCI, expiration of a validity timer or duration, or the like. In other words, the OD-SSB may be determined as not being available if an OD-SSB deactivation indicator is received or its validity timer/period has expired. A runtime of a validity timer may be pre-determined by a standard specification and/or explicitly configured/indicated by RRC signaling, MAC CE signaling, DCI, or the like. Conversely, the OD-SSB may be determined as being available if an OD-SSB activation indicator is received or a validity timer/period is still active/running. For example, the validity timer may be initiated upon reception of a respective indicator, may be initiated when certain conditions are fulfilled, or the like. An initiation timing may be determined according to a standard specification, for example. However, the present disclosure is not limited thereto, and an OD-SSB may be determined as not being available implicitly by, e.g. DL BWP switching, where the OD-SSB is configured and associated with a BWP. Further, the OD-SSB may be determined as being available if the OD-SSB is not turned off by any one of said signaling, for example.

Further, a P-CSI report may be considered valid after a RRC configuration is valid and applied, an SP-CSI may be valid after DCI triggering/activation for SPS-CSI report on a PUSSCH, or after MAC CE activation for SP-CSI report on PUCCH. Further, an AP-CSI report may be considered valid after DCI triggering.

### Embodiment 1

In an embodiment, a communication apparatus 100 as illustrated in Figs. 4 and 5 (left hand side) is provided. The transceiver 120, in operation, receives a channel state information, CSI, configuration indicating a CSI resource list including an on-demand synchronization signal block, OD-SSB, and monitors CSI resources included in the CSI resource list. The communication apparatus 100 further comprises circuitry 120 which, in operation, derives at least one CSI report quantity from received resources, and performs CSI reporting according to the CSI report configuration. In this framework, the circuitry 120 determines whether or not the OD-SSB is available and performs at least one of the following operations, when it is determined that the OD-SSB is not available: (i) suspending the CSI reporting as long as the OD-SSB is not available, (ii) deactivating the CSI reporting, (iii) performing an error operation, (iv) performing CSI reporting, wherein respective CSI reports include CSI report quantities derived only from CSI resources other than the OD-SSB, and (v) performing CSI reporting, wherein portions of respective CSI reports dedicated for reporting a CSI report quantity derived from the OD-SSB include data other than said CSI report quantity.

The CSI configuration may define how communication apparatus is to measure and report channel conditions, specify reference signals (by the CSI resource list), reporting intervals, and methods to optimize transmission through accurate channel feedback.

Monitoring the CSI resources may include monitoring occasions intended for transmission of respective CSI resources.

Suspending the CSI reporting may include not transmitting CSI reports as long as the OD-SSB is not available. In other words, when the OD-SSB becomes available again, the CSI reporting according to the CSI report configuration may be resumes.

Suspending the CSI reporting may include dropping the whole CSI report as long as the OD-SSB is not available. In other words, when the OD-SSB becomes available again, the CSI reporting according to the CSI report configuration may be performed again.

Further, deactivating the CSI reporting may include not transmitting CSI reports according to the configured CSI report configuration when the OD-SSB is not available. However, in contrasts to suspending CSI reporting, the communication apparatus 100 may not automatically resume or activate CSI reporting once the OD-SSB becomes available again.

An error operation may include any specified, determined or predetermined operation to be performed by a communication apparatus 100 once an unexpected situation occurs. That is, performing an error operation may include treating an unavailability of OD-SSB when a CSI report is triggered, valid or active, as an error case. The communication apparatus 100 may, for example, not follow the configured CSI reporting, or not expect the OD-SSB to be unavailable when the configured CSI report is triggered, valid or active.

Performing CSI reporting with CSI reports not including CSI report quantities may relate to the monitoring and processing of CSI resources other than the OD-SSB, and/or transmitting CSI reports including CSI report quantities obtained from said other CSI resources. In other words, the CSI report may not include or indicate CSI report quantities derived from the OD-SSB, which is determined to be unavailable.

Similarly, performing CSI reporting with portions dedicated for reporting a CSI report quantity derived from the OD-SSB including other data may relate to the monitoring and processing of CSI resources other than the OD-SSB, and/or transmitting CSI reports including CSI report quantities obtained from said other CSI resources, and/or an OD-SSB resource that was available before but is not available now. In other words, the CSI report may not include or indicate CSI report quantities derived from the OD-SSB, which is determined to be unavailable. However, the portions of the CSI report dedicated for the transmission of CSI quantities derived from the OD-SSB carry other data. It is to be noted, however, that said data may, but is not required to, carry any meaningful information.

**Fig. 6** illustrates the steps of a method for a communication apparatus 100. In step S1, a CSI report configuration is received. The CSI report configuration indicates a CSI resource list including an on-demand synchronization signal block, OD-SSB. In step S2, CSI resources included in the CSI resource list are monitored. In other words, the communication apparatus 100 monitors occasions, wherein CSI resources, including the OD-SSB, are expected to be received. After reception of CSI resources, CSI report quantities are derived from said received resources in step S3. Further, in step S4, CSI reporting is performed according to the CSI configuration.

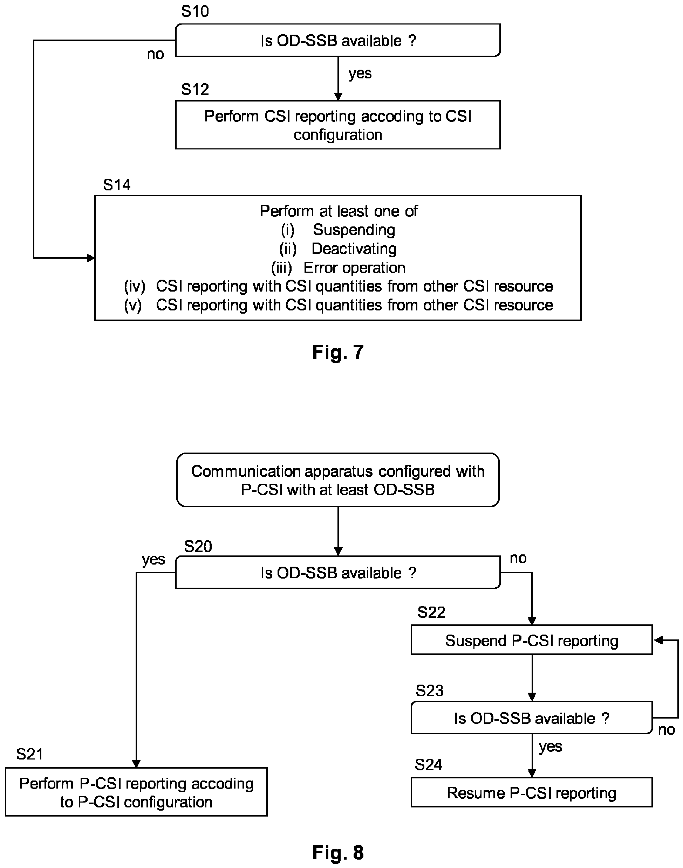

In the framework of the method described with reference to **Fig. 6****,** the communication apparatus 100 performs operations depending on whether or not the OD-SSB is available. In other words, the CSI reporting performed may depend on whether or not the OD-SSB is available. The availability of the OD-SSB relate, for instance, to whether or not reception of the OD-SSB is triggered by a base station 200, whether or not the OD-SSB is active, or the like. In other words, the availability of the OD-SSB relates to whether or not a CSI report quantity can be derived from a received OD-SSB, including the case that the OD-SSB is/is not received. It is to be noted that the operations described in the following, in particular with reference to **Fig. 7****,** may be performed consecutively and/or in parallel to the operations illustrated in **Fig. 6****.**

**Fig. 7** illustrates the steps of a method for a communication apparatus 100 according to an embodiment, specifying the operation of the CSI reporting performed depending on the availability of the OD-SSB. Specifically, in step S10, it is determined whether or not the OD-SSB is available. If the OD-SSB is not available, at least one of the following operations is performed: (i) suspending the CSI reporting as long as the OD-SSB is not available, (ii) deactivating the CSI reporting, (iii) performing an error operation, (iv) performing CSI reporting, wherein respective CSI reports include CSI report quantities derived only from CSI resources other than the OD-SSB, and (v) performing CSI reporting, wherein portions of respective CSI reports dedicated for reporting a CSI report quantity derived from the OD-SSB include data other than said CSI report quantity.

On the other hand, when it is determined that the OD-SSB is available, CSI reporting may be performed according to the configured CSI configuration.

Further, when the OD-SSB becomes available again after being determined as not available, the communication apparatus 100 may activate CSI reporting. Alternatively, a predetermined operation, e.g. a default operation may be performed when the OD-SSB becomes available again. The default operation may be activation of CSI reporting, resuming CSI reporting, maintaining deactivated CSI reporting, or maintaining a suspended state of CSI operation, for instance. That is, the communication apparatus 100 may determine whether or not the CSI reporting is resumed when the OD-SSB becomes available, according to a CSI reporting setting (e.g. a default setting). Alternatively, the communication apparatus 100 may resume CSI reporting when the OD-SSB becomes available and a resume/activation trigger is received, for example, from a base station 200.

Further, a base station 200 as illustrated in Figs. 4 and 5 (right hand side) is provided. The transceiver 220, in operation, transmits a channel state information, CSI, report configuration indicating a CSI resource list including an on-demand synchronization signal block, OD-SSB. The circuitry 210, in operation, performs CSI report reception according to the CSI report configuration, wherein the circuitry 210, in operation performs at least one of the following operations, when the OD-SSB is not available (i) suspending the CSI report reception as long as the OD-SSB is not available, (ii) deactivating the CSI report reception, (iii) performing CSI report reception, wherein respective CSI reports include CSI report quantities derived only from CSI resources other than the OD-SSB, and (iv) performing CSI report reception, wherein portions of respective CSI reports dedicated for reporting a CSI report quantity derived from the OD-SSB include data other than said CSI report quantity. For example, the operations (i) to (iv) performed by the base station 200 may include controlling the transceiver to perform respective operations.

Further, a method for a base station 200 is provided. The method comprises transmitting a channel state information, CSI, report configuration indicating a CSI resource list including an on-demand synchronization signal block, OD-SSB; transmitting an OD-SSB availability indicator indicating whether or not the OD-SSB is available; and performing CSI report reception according to the CSI report configuration, wherein at least one of the following operations is performed, when the OD-SSB is not available (i) suspending the CSI report reception as long as the OD-SSB is not available, (ii) deactivating the CSI report reception, (iii) performing CSI report reception, wherein respective CSI reports include CSI report quantities derived only from CSI resources other than the OD-SSB, and (iv) performing CSI report reception, wherein portions of respective CSI reports dedicated for reporting a CSI report quantity derived from the OD-SSB include data other than said CSI report quantity.

Details of operations performed according to the present disclosure, which may equally be applied to the present embodiment, will become apparent from the description of the following specific embodiments 2 to 11. It is, however, to be noted that the present disclosure is not limited to any of the specific embodiments.

### Embodiment 2

A communication apparatus 100 according to embodiment 2 performs operations similar to the embodiments described above, in particular embodiment 1, wherein the communication apparatus 100 is configured with a periodic CSI, P-CSI, configuration indicating a CSI resource list including an OD-SSB. Further, when the circuitry 110 determines that the OD-SSB is not available, the associated P-CSI report is suspended. Further, when the OD-SSB becomes available, the associated P-CSI reporting is resumed.

In other words, the circuitry 110, in operation, determines whether or not the OD-SSB is available and suspends the CSI reporting as long as the OD-SSB is not available. When the OD-SSB becomes available again, the communication apparatus 100 resumes CSI-reporting according to the configured P-CSI configuration.

**Fig. 8** illustrates the steps of a method for a communication apparatus 100 according to embodiment 2. In step S20, it is determined whether or not the OD-SSB is available. If the OD-SSB is available (yes in step S20), P-CSI reporting is performed according to the configured P-CSI configuration in step S21. On the other hand, if it is determined that the OD-SSB is not available (no in step S20), P-CSI reporting is suspended in step S22. That is, only when it is determined in step S23 that the OD-SSB is available again, the P-CSI reporting is resumed. In other words, the P-CSI reporting is not performed or dropped during a certain period, within which the OD-SSB is not available. On the other hand, as soon as the OD-SSB becomes available again, P-CSI reporting is performed according to the configured P-CSI configuration.

With this approach, an overhead in uplink (UL) data transmissions is reduced during the time period of suspended P-CSI reporting. Further, the network (e.g. a base station 200) as well as the communication apparatus 100 may save energy. Therefore, the approach may allow for a reduction of energy consumption of both the base station 200 and the communication apparatus 100. Still further, since the P-CSI reporting is resumed once the OD-SSB becomes available again, the base station 200 is not required to control/indicate to the communication apparatus that the P-CSI reporting is to be performed again. Therefore, also control data overhead in the wireless communication may be reduced.

### Embodiment 3

A communication apparatus 100 according to embodiment 3 performs operations similar to the embodiments described above, in particular embodiment 1, wherein the communication apparatus 100 is configured with a semi-persistent CSI, SP-CSI, configuration indicating a CSI resource list including an OD-SSB. Further, when the circuitry 110 determines that the OD-SSB is not available, the associated SP-CSI report is deactivated. That is, when the OD-SSB becomes available, the associated SP-CSI reporting maintains deactivated, e.g. until activated by dedicated signaling from the base station 200.

In other words, the circuitry 110, in operation, determines whether or not the OD-SSB is available and deactivates the CSI reporting when the OD-SSB is not available. When the OD-SSB becomes available again, the communication apparatus 100 maintains the CSI reporting in the deactivated state. Further, the circuitry 110, in operation, resumes or activates the CSI reporting when the OD-SSB becomes available and the resume/activating trigger is received.

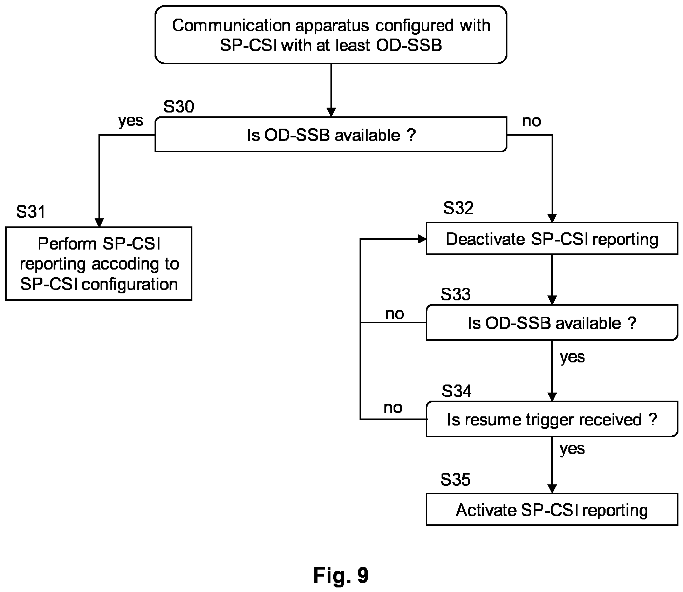

**Fig. 9** illustrates the steps of a method for a communication apparatus 100 according to embodiment 3. In step S30, it is determined whether or not the OD-SSB is available. If the OD-SSB is available (yes in step S30), SP-CSI reporting is performed according to the configured SP-CSI configuration in step S31. On the other hand, if it is determined that the OD-SSB is not available (no in step S30), SP-CSI reporting deactivated in step S32. That is, even when it is determined in step S33 that the OD-SSB is available again, the SP-CSI reporting is not activated and resumed (no in step S33), unless a resume/activating trigger is received (yes in step S34). In other words, the SP-CSI reporting is not performed after the OD-SSB became unavailable. Further, the SP-CSI reporting is only resumed/reactivated again if respective separate signaling is received from the base station 200.

With this approach, an overhead in uplink (UL) data transmissions is reduced during the time period of deactivated SP-CSI reporting, just as in embodiment 2. Further, the network (e.g. a base station 200) as well as the communication apparatus 100 may save energy. Therefore, the approach may allow for a reduction of energy consumption of both the base station 200 and the communication apparatus 100. However, due to the fact that the communication apparatus 100 activates SP-CSI reporting after the OD-SSB has become available again only if respective signaling is received from the base station 200, a higher flexibility may be achieved by activating SP-CSI reporting and OD-SSB separately.

### Embodiment 4

A communication apparatus 100 according to embodiment 4 performs operations similar to the embodiments described above, in particular embodiment 1, wherein the communication apparatus 100 is configured with a semi-persistent CSI, SP-CSI configuration indicating a CSI resource list including an OD-SSB. Further, when the circuitry 110 determines that the OD-SSB is not available, the associated SP-CSI report is suspended. Further, when the OD-SSB becomes available, the associated SP-CSI reporting is resumed.

In other words, the circuitry 110, in operation, determines whether or not the OD-SSB is available and suspends the CSI reporting as long as the OD-SSB is not available. When the OD-SSB becomes available again, the communication apparatus 100 resumes CSI-reporting according to the configured P-CSI configuration.

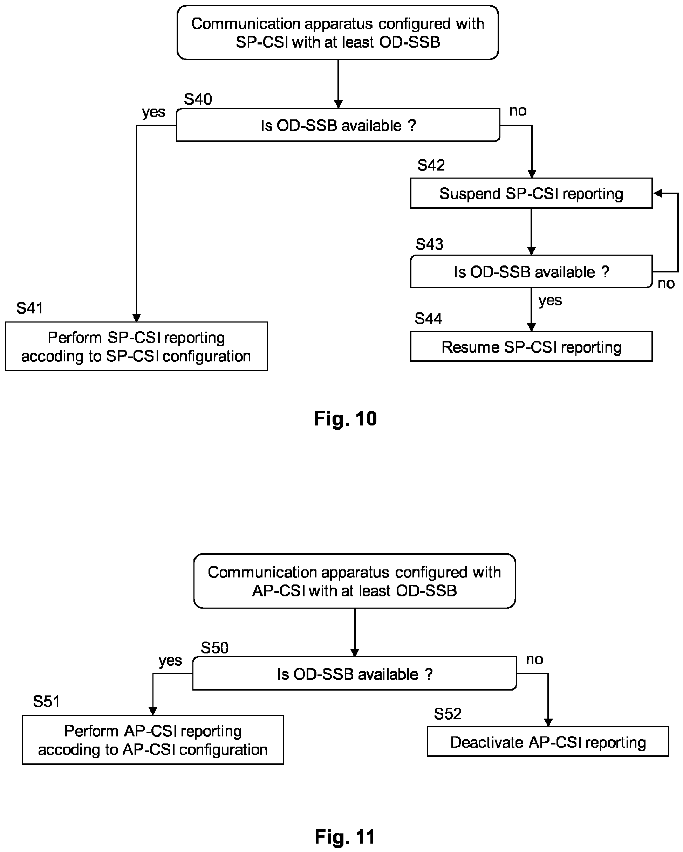

**Fig. 10** illustrates the steps of a method for a communication apparatus 100 according to embodiment 4. In step S40, it is determined whether or not the OD-SSB is available. If the OD-SSB is available (yes in step S40) and the SP-CSI configuration is still active, SP-CSI reporting is performed according to the configured SP-CSI configuration in step S41. On the other hand, if it is determined that the OD-SSB is not available (no in step S40) and the SP-CSI configuration is still active, SP-CSI reporting is suspended in step S42. That is, only when it is determined in step S43 that the OD-SSB is available again and the SP-CSI configuration is still active, the SP-CSI reporting is resumed. In other words, the SP-CSI reporting is not performed during a certain period, within which the OD-SSB is not available. On the other hand, as soon as the OD-SSB becomes available again, SP-CSI reporting is performed according to the configured SP-CSI configuration.

With this approach, an overhead in uplink (UL) data transmissions is reduced during the time period of suspended P-CSI reporting. Further, the network (e.g. a base station 200) as well as the communication apparatus 100 may save energy. Therefore, the approach may allow for a reduction of energy consumption of both the base station 200 and the communication apparatus 100. Still further, since the P-CSI reporting is resumed once the OD-SSB becomes available again, the base station 200 is not required to control/indicate to the communication apparatus that the P-CSI reporting is to be performed again. Therefore, also control data overhead in the wireless communication may be reduced.

### Embodiment 5

A communication apparatus 100 according to embodiment 5 performs operations similar to the embodiments described above, in particular embodiment 1, wherein the communication apparatus 100 is configured with an aperiodic CSI, AP-CSI configuration indicating a CSI resource list including an OD-SSB. Further, when the circuitry 110 determines that the OD-SSB is not available, the associated AP-CSI report is deactivated and not expected to be triggered. In other words, when OD-SSB is available, the communication apparatus 100 may be triggered, e.g. by DCI. On the other hand, when the OD-SSC becomes unavailable, the communication apparatus 100 deactivates the AP-CSI reporting and does not expect an AP-CSI report to be triggered by DCI.

In other words, the circuitry 110, in operation, determines whether or not the OD-SSB is available and deactivates the CSI reporting when it is determined that the OD-SSB is not available.

**Fig. 11** illustrates the steps of a method for a communication apparatus 100 according to embodiment 5. In step S50, it is determined whether or not the OD-SSB is available. If the OD-SSB is available (yes in step S50), AP-CSI reporting is performed according to the configured AP-CSI configuration in step S51. For instance, an AP-CSI report may be transmitted by the communication apparatus 100 when triggered by DCI. On the other hand, if it is determined that the OD-SSB is not available (no in step S50), AP-CSI reporting is deactivated in step S52. That is, the communication apparatus 100 does not expect an AP-CSI report to be triggered by the base station 200, e.g. by DCI.

With this approach, misalignment between the behavior of the base station 200 and the behavior of the communication apparatus 100 may be prevented.

### Embodiment 6

A communication apparatus 100 according to embodiment 6 performs operations similar to the embodiments described above, in particular embodiment 1, wherein the communication apparatus 100 is configured with an aperiodic CSI, AP-CSI configuration indicating a CSI resource list including an OD-SSB. Further, when the circuitry 110 determines that the OD-SSB becomes available, the associated AP-CSI report is activated and may be triggered, e.g. by DCI. In On the other hand, when the OD-SSB becomes unavailable, the communication apparatus 100 may deactivate the AP-CSI reporting and does not expect an AP-CSI report to be triggered by DCI, as described in embodiment 5.

In other words, the circuitry 110, in operation, determines whether or not the OD-SSB is available and may deactivate the CSI reporting when it is determined that the OD-SSB is not available. Further, the circuitry 110, in operation, activates CSI reporting when the OD-SSB becomes available

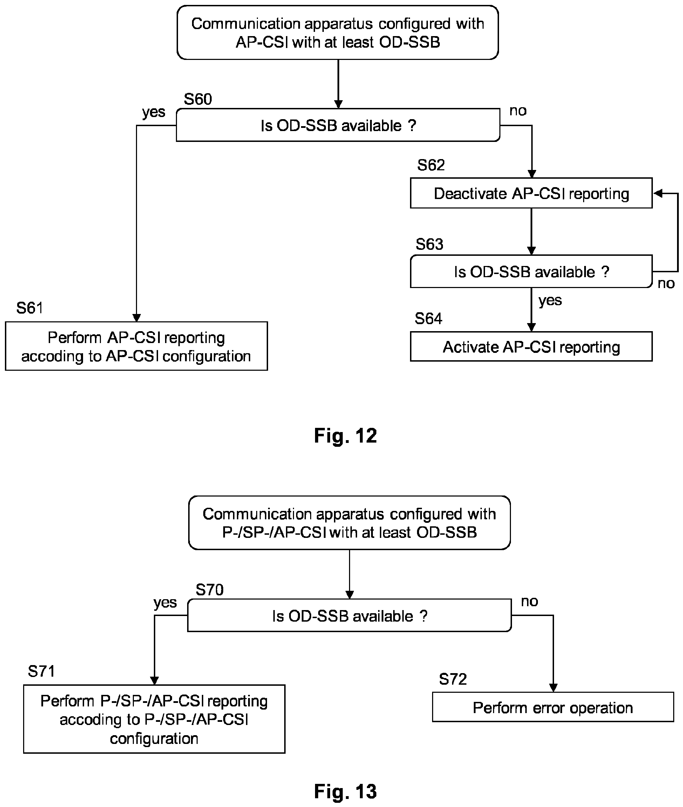

**Fig. 12** illustrates the steps of a method for a communication apparatus 100 according to embodiment 6. Steps S60, S61, and S62 correspond to steps S50, S51, and S52 of Fig. 13. Therefore, a description of the operations performed in these steps is not repeated. In step S63 (following step S63), it is determined whether the OD-SSB is available. That is, after the OD-SSB being determined unavailable and, in consequence, the AP-CSI reporting being deactivated, it is determined in step S63 whether the OD-SSB is available again. If the OD-SSB is not available (no in step S63), AP-CSI reporting is kept deactivated. On the other hand, if the OD-SSB is determined as being available (yes in step S63), AP-CSI reporting is activated in step S64 and the communication apparatus 100 may expect to be triggered to transmit an AP-CSI report, e.g. by DCI.

With this approach, the AP-CSI reporting is jointly activated with activation/availability of the OD-SSB. Therefore, the base station 200 is not required to transmit respective signaling and, hence, a control signal overhead may be reduced, since OD-SSB activation and AP-CSI reporting activation are not necessarily performed separately.

### Embodiment 7

A communication apparatus 100 according to embodiment 7 performs operations similar to the embodiments described above, in particular embodiment 1, wherein the communication apparatus 100 is configured with a periodic, a semi-persistent, or an aperiodic CSI configuration indicating a CSI resource list including an OD-SSB. Further, when the circuitry 110 determines that the OD-SSB becomes unavailable, an error operation is performed. That is, when a CSI report is triggered, valid or active, the communication apparatus 100 does not expect the associated OD-SSB to be unavailable or off. If the associated OD-SSB, however, is unavailable, the communication apparatus 100 treats this as an error case and may not perform CSI reporting.

In other words, the circuitry 110, in operation, determines whether or not the OD-SSB is available and performs an error operation when it is determined that the OD-SSB is not available.

**Fig. 13** illustrates the steps of a method for a communication apparatus 100 according to embodiment 7. In step S70, it is determined whether or not the OD-SSB is available. If the OD-SSB is available (yes in step S70), CSI reporting is performed according to the configured CSI configuration in step S71. On the other hand, if it is determined that the OD-SSB is not available (no in step S70), an error operation is performed in step S72. That is, the communication apparatus 100 does not expect a, OD-SSB to be unavailable if configured with a CSI configuration including an OD-SSB as a CSI resource.

With this approach, misalignment between the behavior of the base station 200 and the behavior of the communication apparatus 100 may be prevented.

### Embodiment 8

A communication apparatus 100 according to embodiment 8 performs operations similar to the embodiments described above, in particular embodiment 1, wherein the communication apparatus 100 is configured with a periodic, a semi-persistent, or an aperiodic CSI configuration indicating a CSI resource list including an OD-SSB. Further, the CSI resource list includes at least one CSI resource other than the OD-SSB. For example, the CSI resource list may include, in addition to the OD-SSB, one or more CSI-RS resources. Said CSI resources may be indicated in a same CSI-ReportConfig. When performing CSI reporting, the communication apparatus 100 includes the CSI report quantities derived from said other CSI resources.

In other words, the circuitry 110, in operation, determines whether or not the OD-SSB is available and performs CSI reporting, wherein respective CSI reports include CSI report quantities derived only from CSI resources other than the OD-SSB, when it is determined that the OD-SSB is not available.

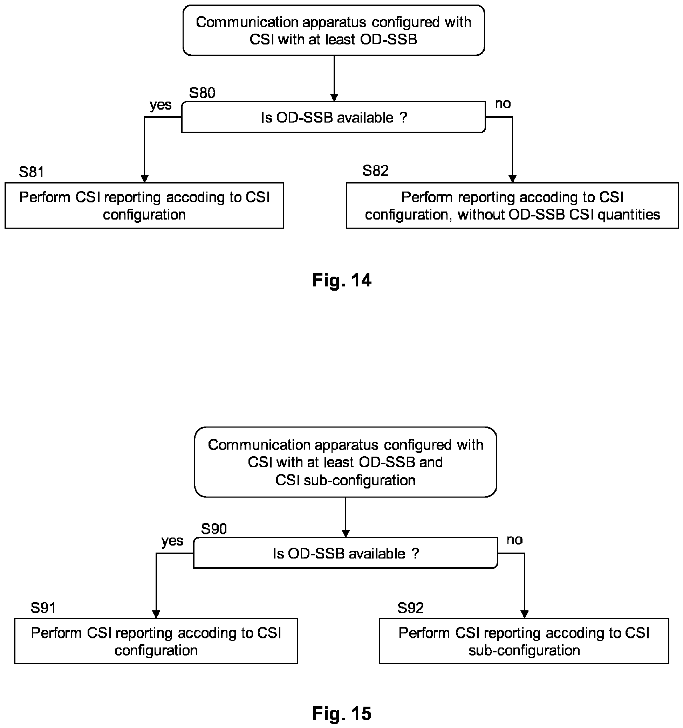

**Fig. 14** illustrates the steps of a method for a communication apparatus 100 according to embodiment 8. In step S80, it is determined whether or not the OD-SSB is available. If the OD-SSB is available (yes in step S80), CSI reporting is performed according to the configured CSI configuration in step S81. On the other hand, if it is determined that the OD-SSB is not available (no in step S80), CSI reporting is performed in step S82. However, in respective CSI reports, CSI report quantities that are derived only from CSI resources other than the OD-SSB are included in the CSI report.

For example, the communication apparatus 100 reports CSI report quantities that are not associated with OD-SSB. That is, the communication apparatus 100 may transmit, when an "always-on" SSB as well as a, OD-SSB is configured within a CSI report configuration, and when OD-SSB is not available, CSI report quantities derived from the "always-on" SSB and/or other CSI-RS resources are included in the respective CSI report. On the other hand, CSI report quantities intended associated with/intended to be derived from OD-SSB (e.g. ssb-index-RSRP, ssb-index-SINR, or the like) are not reported in the CSI report. In other words, said CSI report quantities are dropped by the communication apparatus 100.

In a variation, the CSI report, which may include CSI part 1 of fixed size and CSI part 2 of variable size, may indicate that the said CSI report quantities are dopped/not reported, in CSI part 1.

With this approach, in contrast to suspending or deactivating CSI reporting, as described in the framework of the other embodiments, dropping the CSI report quantities associated with OD-SSB from the CSI reports may allow the network/the base station 200 to acquire more information, which may facilitate/improve scheduling operations.

### Embodiment 9

A communication apparatus 100 according to embodiment 9 performs operations similar to the embodiments described above, in particular embodiment 1, wherein the communication apparatus 100 is configured with a periodic, a semi-persistent, or an aperiodic CSI configuration indicating a CSI resource list including an OD-SSB. Further, the CSI resource list includes at least one CSI resource other than the OD-SSB. For example, the CSI resource list may include, in addition to the OD-SSB, one or more CSI-RS resources. Said CSI resources may be indicated in a same CSI-ReportConfig. Further, the communication apparatus 100 is configured with a CSI sub-configuration which includes a CSI resource list not including the OD-SSB. When the OD-SSB is not available, off or deactivated, the communication apparatus 100 may be triggered with a CSI state associated with said sub-configuration that is not associated with the OD-SSB CSI resource.

In other words, the CSI report configuration includes a CSI report sub-configuration indicating a CSI resource list not including the OD-SSB. Further, and the circuitry 110, in operation, performs CSI reporting according to the CSI-sub-configuration when is determined that the OD-SSB is not available.

**Fig. 15** illustrates the steps of a method for a communication apparatus 100 according to embodiment 9. In step S90, it is determined whether or not the OD-SSB is available. If the OD-SSB is available (yes in step S90), CSI reporting is performed according to the configured CSI configuration in step S91. In other words, the communication apparatus 100 may be triggered with a CSI state associated with the CSI report configuration including an OD-SSB as CSI resource. On the other hand, if it is determined that the OD-SSB is not available (no in step S90), CSI reporting is performed in step S92 according to the CSI sub-configuration. In other words, the communication apparatus 100 may be triggered with a CSI state associated with the CSI report configuration or sub-configuration not including an OD-SSB as CSI resource.

With this approach, the network/base station 200 may control the CSI reporting to be performed by the communication apparatus 100 with or without the OD-SSB more flexibly.

### Embodiment 10

A communication apparatus 100 according to embodiment 10 performs operations similar to the embodiments described above, in particular embodiment 1, wherein the communication apparatus 100 is configured with an operation to be performed when it is determined that the OD-SSB is not available. In other words, the operation performed when the OD-SSB is not available in the framework of CSI reporting with a CSI report configuration including an OD-SSB as a CSI resource depends on a configuration of the communication apparatus 100.

For this purpose, the transceiver 120, in operation, may receive a CSI SSB unavailability configuration indicating an operation to be performed when it is determined that the OD-SSB is not available.

For example, the communication apparatus 100 may be configured by RRC signaling which of the operations described, for instance, in the framework of embodiment 1 is to be performed in a case where it is determined that the OD-SSB is not available.

In addition or alternatively, the communication apparatus 100 may be configured with an operation to be performed when the OD-SSB becomes available again. In other words, the operation performed when the OD-SSB becomes available in the framework of CSI reporting with a CSI report configuration including an OD-SSB as a CSI resource depends on a configuration of the communication apparatus 100.

For this purpose, the transceiver 120, in operation, may receive a CSI SSB availability configuration indicating an operation to be performed when the OD-SSB becomes available.

For example, the communication apparatus 100 may be configured by RRC signaling which of the operations described, for instance, in the framework of embodiment 1 is to be performed in a case where it is determined that the OD-SSB becomes available after the OD-SSB has not been available.

In a specific implementation of this approach, the communication apparatus 100 may be configured to perform different operations when the OD-SSB is unavailable, depending on the configured CSI report configuration.

For example, the circuitry 110, in operation, may suspend the CSI reporting when it is determined that the OD-SSB is not available and the CSI resource list includes the OD-SSB and CSI resources other than the OD-SSB, and may, in operation, deactivate the CSI reporting when it is determined that the OD-SSB is not available and the CSI resource list includes only the OD-SSB.

That is, for example, when the communication apparatus 100 can be configured either with a CSI report configuration, where the CSI resource list includes both OD-SSB and at least one other CSI-RS resource or with a CSI report configuration, where the CSI resource list only includes OD-SSB, the communication apparatus 100 may suspend the CSI reporting or deactivate the reporting, respectively, when the OD-SSB becomes unavailable.

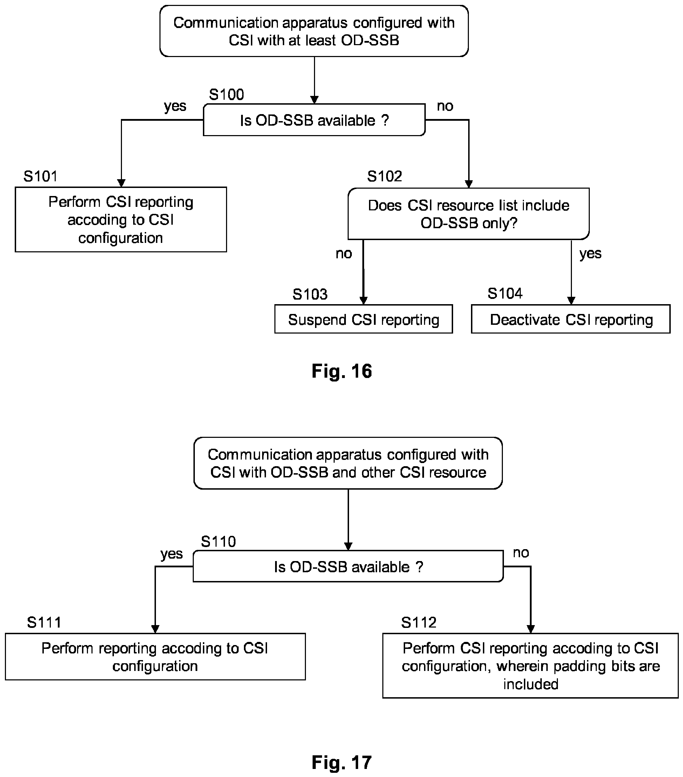

**Fig. 16** illustrates the steps of a method for a communication apparatus 100 according to embodiment 10. In step S100, it is determined whether or not the OD-SSB is available. If the OD-SSB is available (yes in step S100), CSI reporting is performed according to the configured CSI configuration in step S101. On the other hand, if it is determined that the OD-SSB is not available (no in step S100), it is determined in step S102 whether the CSI resource list includes OD-SSB only as CSI resource. If it is determined that the CSI resource list does not include OD-SSB as a CSI resource only (no in step S102), i.e. the CSI resource list includes at least one CSI resource other than OD-SSB (e.g. CSI-RS), the communication apparatus 100 suspends the CSI reporting in step S103. On the other hand, when it is determined that the CSI resource list includes only OD-SSB as CSI resource (yes in step S102), the communication apparatus 100 may deactivate the CSI reporting in step S104.

It is to be noted that the communication apparatus 100 may be configured with a corresponding operation to be performed, depending on the CSI configuration. In the above case, the communication apparatus 100 is configured to suspend CSI reporting when the CSI resource list includes CSI resources other than OD-SSB and to deactivate CSI reporting if the CSI resource list only includes the OD-SSB. The configuration may be performed by RRC signaling, for instance.

With this approach, the network/base station 200 may control CSI reporting with or without associated OD-SSB, more flexibly.

### Embodiment 11

A communication apparatus 100 according to embodiment 11 performs operations similar to the embodiments described above, in particular embodiments 1 and 8, wherein the communication apparatus 100 performs CSI reporting when the OD-SSB is not available. In the CSI report, however, a CSI report quantity associated with the OD-SSB is not included. Instead, portions of the CSI report, which are dedicated to carrying the information on the CSI report quantity associated with the OD-SSB include padding bits.

That is, the circuitry 110, in operation, may perform CSI reporting, wherein portions of respective CSI reports dedicated for reporting a CSI report quantity derived from the OD-SSB include data other than said CSI report quantity, when the OD-SSB is not available.

It is to be noted that said data may or may not carry information.

For example, the circuitry 110, in operation, performs the CSI reporting when it is determined that the OD-SSB is not available, wherein portions of CSI reports dedicated for reporting a CSI report quantity derived from the OD-SSB include padding bits.

**Fig. 17** illustrates the steps of a method for a communication apparatus 100 according to embodiment 11. In step S110, it is determined whether or not the OD-SSB is available. If the OD-SSB is available (yes in step S110), CSI reporting is performed according to the configured CSI configuration in step S111. On the other hand, if it is determined that the OD-SSB is not available (no in step S100), CSI reporting is performed according to the CSI configuration, wherein, however, portions dedicated for carrying information on a CSI report quantity associated with the OD-SSB include padding bits.

The padding bits may be predetermined. For example, the padding bits may be specified in a standard or may depend on the specific implementation. The padding bits may indicate a CSI report quantity previously reported. That is, the communication apparatus 100 may, instead of including a CSI report quantity derived from the OD-SSB (which is not available), include a CSI report quantity obtained from a previous OD-SSB and report said CSI report quantity again.

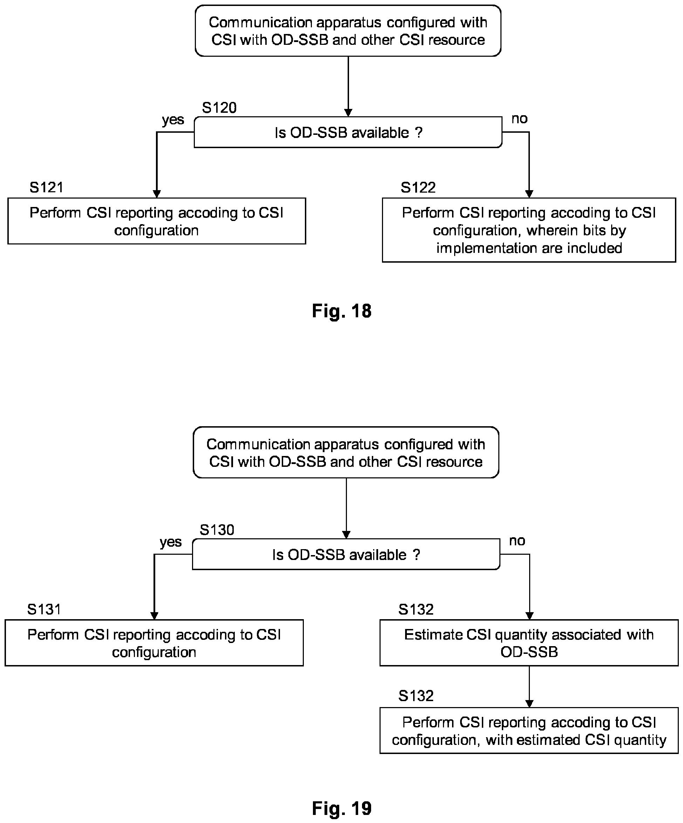

**Fig. 18** illustrates the steps of a method for a communication apparatus 100 according to such a first variation of embodiment 11. Steps S120 and S121 of FIG. 18 correspond to steps S110 and S111 of Fig. 17, respectively. In step S122, however, the portions of the CSI report associated with a CSI report quantity derived from an OD-SSB are replaced with padding bits according to a specific implementation or indicate a CSI report quantity previously reported.

Alternatively, the communication apparatus 100 may estimate or predict a CSI report quantity and report said CSI report quantity within portions of the CSI report dedicated to CSI report quantities derived from the OD-SSB, if it is determined that the OD-SSB is not available.

In other words, the circuitry 110 may, in operation, when it is determined that the OD-SSB is not available, estimate or predict a corresponding CSI report quantity. The padding may bits indicate the estimated CSI report quantity,

For estimation of the CSI report quantity, the communication apparatus 100 may utilize corresponding CSI report quantities previously determined and extrapolate in time so as to estimate the CSI report quantity to be reported. However, the present disclosure is not limited thereto, and another method for estimating the CSI report quantity may be utilized.

**Fig. 19** illustrates the steps of a method for a communication apparatus 100 according to the second variation of embodiment 11. Steps S130 and S131 of FIG. 19 correspond to steps S110 and S111 of Fig. 17, respectively. In step S132, however, the communication apparatus 100 estimates the CSI quantity associated with the OD-SSB and performs CSI reporting according to the CSI configuration, with the estimated CSI quantity in step S132.

With the approach of embodiment 11 and its variations, the specification impact may be reduced, and/or the complexity of the operations performed by the communication apparatus 100 as well as the base station 200 may be reduced.

In a variation, the CSI report, which may include CSI part 1 of fixed size and CSI part 2, may indicate that the padding behavior in CSI part 1. For example, part 1 of the CSI report may indicate that the reported CSI report quantity associated with OD-SSB are padding bits, predetermined bits, or indicate a previous CSI report value or an estimated CSI report value.

### RRC connection setup and reconfiguration procedures

Interactions between a UE, gNB, and AMF (a 5GC entity) in the context of a transition of the UE from RRC_IDLE to RRC_CONNECTED for the NAS part are described (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### Open-RAN

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul and the F1 interface is defined by the 3GPP. Further, the link between O-DU and O-RU is referred to as fronthaul and its functional split point may be Split Option 7-2x adopted as the O-RAN fronthaul specifications.

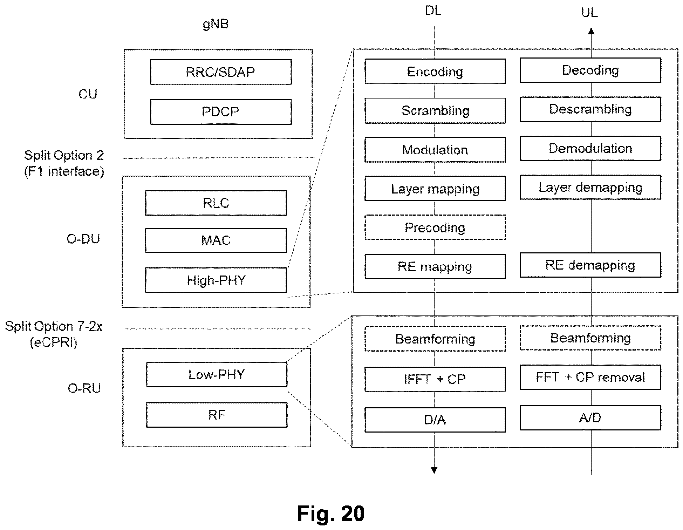

**Fig. 20** illustrates an example in which the base station functionality of the gNB is subjected to functional splitting into CU, O-DU, O-RU by Split Option 2 and Split Option 7-2x.

CU may include, for example, an RRC (radio resource control) function, an SDAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse First Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (First Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### SBFD

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween. Further, sidelink transmission/reception may also be included as a transmission/reception direction in units of sub-bands which are the divided domains.

### XDD: Cross Division Duplex

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### Control signals

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### Base Station

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### Terminal

A terminal or user terminal or user device or mobile station or mobile node is referred to in the LTE and NR as a user equipment (UE). This may be a mobile device or communication apparatus such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### Uplink/Downlink/Sidelink

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### Data Channels/Control Channels

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### Reference Signals

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### Time Intervals

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

### Frequency Bands

The present disclosure may be applied to any of a licensed band and an unlicensed band.

### Communication

The present disclosure may be applied to any of communication between a base station and a terminal (Uu-link communication), communication between a terminal and a terminal (Sidelink communication), Vehicle to Everything (V2X) communication, and communication between an Ambient loT Reader and an Ambient loT Device. The channels in the present disclosure may be replaced with PSCCH, PSSCH, Physical Sidelink Feedback Channel (PSFCH), PSBCH, PRDCH (Physical Reader-to-Device Channel), PDRCH (Physcial Deviceto-Reader Channel), PDCCH, PUCCH, PDSCH, PUSCH, and PBCH. For example, control information of the present disclosure may be replaced with any of DCI, UCI, SCI (Sidelink Control Information), R2D Control Information and D2R Control Information.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### Antenna Ports

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### Ambient loT

The terminal and the base station in one exemplary embodiment of the preset disclosure may be replaced with any of an Ambient loT Device or an Ambient loT Reader.

The Ambient loT Device may be a wireless communication device having a backscattering function or having a transmission/reception bandwidth of several resource blocks or less. Further, the Ambient loT Reader may be a wireless communication device having a communication function with an Ambient loT Device. The Ambient loT Device may also be referred to as an Ambient loT terminal, an loT terminal, an LPWA terminal, or a Tag.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (loT)". The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also, a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

### Further Aspects

According to a first aspect, provided is a communication apparatus, comprising: a transceiver which, in operation, receives a channel state information, CSI, report configuration indicating a CSI resource list including an on-demand synchronization signal block, OD-SSB, and monitors CSI resources included in the CSI resource list; and circuitry which, in operation, derives at least one CSI report quantity from received CSI resources, and performs CSI reporting according to the CSI report configuration, wherein the circuitry, in operation, determines whether or not the OD-SSB is available and performs at least one of the following operations, when it is determined that the OD-SSB is not available: (i) suspending the CSI reporting as long as the OD-SSB is not available, (ii) deactivating the CSI reporting, (iii) performing an error operation, (iv) performing CSI reporting, wherein respective CSI reports include CSI report quantities derived only from CSI resources other than the OD-SSB, and (v) performing CSI reporting, wherein portions of respective CSI reports dedicated for reporting a CSI report quantity derived from the OD-SSB include data other than said CSI report quantity.

According to an embodiment, the circuitry, in operation, activates CSI reporting when the OD-SSB becomes available.

According to an embodiment, the circuitry, in operation, determines whether or not the CSI reporting is resumed when the OD-SSB becomes available, according to a CSI reporting setting

According to an embodiment, the transceiver, in operation, receives a resume trigger; and the circuitry, in operation, resumes the CSI reporting when the OD-SSB becomes available and the resume trigger is received.

According to an embodiment, the CSI report configuration includes a CSI report sub-configuration indicating a CSI resource list not including the OD-SSB; and the circuitry, in operation, performs CSI reporting according to the CSI-sub-configuration when is determined that the OD-SSB is not available.

According to an embodiment, the transceiver, in operation, receives a CSI SSB unavailability configuration indicating an operation to be performed when it is determined that the OD-SSB is not available.

According to an embodiment, the transceiver, in operation, receives a CSI SSB availability configuration indicating an operation to be performed when the OD-SSB becomes available.

According to an embodiment, the circuitry, in operation, suspends the CSI reporting when it is determined that the OD-SSB is not available and the CSI resource list includes the OD-SSB and CSI resources other than the OD-SSB; and the circuitry, in operation, deactivates the CSI reporting when it is determined that the OD-SSB is not available and the CSI resource list includes only the OD-SSB.

According to an embodiment, the circuitry, in operation, performs the CSI reporting when it is determined that the OD-SSB is not available, wherein portions of CSI reports dedicated for reporting a CSI report quantity derived from the OD-SSB include padding bits.

According to an embodiment, the padding bits are predetermined or indicate a CSI report quantity previously reported.

According to an embodiment, the circuitry, in operation, when it is determined that the OD-SSB is not available, estimates a corresponding CSI report quantity; and the padding bits indicate the estimated CSI report quantity.

According to an embodiment, a CSI report quantity derived from the OD-SSB includes at least one of an SSB reference signal received power, SSB-RSRP, and an SSB signal to interference plus noise ratio, SSB-SINR.

According to an embodiment, the CSI report configuration includes at least one of a periodic CSI, P-CSI, report configuration, a semi-persistent CSI, SP-CSI, report configuration, and an aperiodic CSI, AP-CSI, report configuration.

According to an embodiment, the CSI resources other than the OD-SSB include a CSI reference signal, CSI-RS.

According to a second aspect, provided is a method for a communication apparatus, comprising receiving a channel state information, CSI, report configuration indicating a CSI resource list including an on-demand synchronization signal block, OD-SSB; monitoring CSI resources included in the CSI resource list; deriving at least one CSI report quantity from received CSI resources; and performing CSI reporting according to the CSI report configuration, wherein it is determined whether or not the OD-SSB is available; and at least one of the following operations is performed, when it is determined that the OD-SSB is not available: (i) suspending the CSI reporting as long as the OD-SSB is not available, (ii) deactivating the CSI reporting, (iii) performing an error operation, (iv) performing CSI reporting, wherein respective CSI reports include CSI report quantities derived only from CSI resources other than the OD-SSB, and (v) performing CSI reporting, wherein portions of respective CSI reports dedicated for reporting a CSI report quantity derived from the OD-SSB include data other than said CSI report quantity.

According to an embodiment, the method comprises activating CSI reporting when the OD-SSB becomes available.

According to an embodiment, the method comprises determining whether or not the CSI reporting is resumed when the OD-SSB becomes available, according to a CSI reporting setting.

According to an embodiment, the method comprises receiving a resume trigger; and resuming the CSI reporting when the OD-SSB becomes available and the resume trigger is received.

According to an embodiment, the CSI report configuration includes a CSI report sub-configuration indicating a CSI resource list not including the OD-SSB; and the method comprises performing CSI reporting according to the CSI-sub-configuration when is determined that the OD-SSB is not available.

According to an embodiment, the method comprises receiving a CSI SSB unavailability configuration indicating an operation to be performed when it is determined that the OD-SSB is not available.

According to an embodiment, the method comprises receiving a CSI SSB availability configuration indicating an operation to be performed when the OD-SSB becomes available.

According to an embodiment, the method comprises suspending the CSI reporting when it is determined that the OD-SSB is not available and the CSI resource list includes the OD-SSB and CSI resources other than the OD-SSB; and deactivating the CSI reporting when it is determined that the OD-SSB is not available and the CSI resource list includes only the OD-SSB.

According to an embodiment, the method comprises performing the CSI reporting when it is determined that the OD-SSB is not available, wherein portions of CSI reports dedicated for reporting a CSI report quantity derived from the OD-SSB include padding bits.

According to an embodiment, the padding bits are predetermined or indicate a CSI report quantity previously reported.

According to an embodiment, the method comprises, when it is determined that the OD-SSB is not available, estimating a corresponding CSI report quantity; wherein the padding bits indicate the estimated CSI report quantity.

According to an embodiment, a CSI report quantity derived from the OD-SSB includes at least one of an SSB reference signal received power, SSB-RSRP, and an SSB signal to interference plus noise ratio, SSB-SINR.

According to an embodiment, the CSI report configuration includes at least one of a periodic CSI, P-CSI, report configuration, a semi-persistent CSI, SP-CSI, report configuration, and an aperiodic CSI, AP-CSI, report configuration.

According to an embodiment, the CSI resources other than the OD-SSB include a CSI reference signal, CSI-RS.

According to a third aspect, provided is a base station, comprising: a transceiver which, in operation, transmits a channel state information, CSI, report configuration indicating a CSI resource list including an on-demand synchronization signal block, OD-SSB; and circuitry which, in operation, performs CSI report reception according to the CSI report configuration, wherein the circuitry, in operation performs at least one of the following operations, when the OD-SSB is not available (i) suspending the CSI report reception as long as the OD-SSB is not available, (ii) deactivating the CSI report reception, (iii) performing CSI report reception, wherein respective CSI reports include CSI report quantities derived only from CSI resources other than the OD-SSB, and (iv) performing CSI report reception, wherein portions of respective CSI reports dedicated for reporting a CSI report quantity derived from the OD-SSB include data other than said CSI report quantity.

For example, the operations (i) to (iv) may include controlling the transceiver to perform respective operations.

In an embodiment, the transceiver, in operation, transmits an OD-SSB availability indicator indicating whether or not the OD-SSB is available.

In an embodiment, the transceiver, in operation, transmits an SSC availability indicator indicating that the OD-SSB is available; and the circuitry, in operation, activates CSI report reception.

In an embodiment, the transceiver, in operation, transmits a CSI reporting setting indicating whether CSI reporting is to be resumed when the OD-SSB becomes available.

In an embodiment, the transceiver, in operation, transmits a resume trigger; and the circuitry, in operation, resumes the CSI report reception when the OD-SSB becomes available and the resume trigger is transmitted.

In an embodiment, the CSI report configuration includes a CSI report sub-configuration indicating a CSI resource list not including the OD-SSB; and the circuitry, in operation, performs CSI report reception according to the CSI-sub-configuration when the OD-SSB is not available.

In an embodiment, the transceiver, in operation, transmits a CSI SSB unavailability configuration indicating an operation to be performed when the OD-SSB is not available.

In an embodiment, the transceiver, in operation, transmits a CSI SSB availability configuration indicating an operation to be performed when the OD-SSB becomes available.

In an embodiment, the circuitry, in operation, suspends the CSI report reception when the OD-SSB is not available and the CSI resource list includes the OD-SSB and CSI resources other than the OD-SSB; and the circuitry, in operation, deactivates the CSI report reception when the OD-SSB is not available and the CSI resource list includes only the OD-SSB.

In an embodiment, the circuitry, in operation, performs the CSI report reception when the OD-SSB is not available, wherein portions of CSI reports dedicated for reporting a CSI report quantity derived from the OD-SSB include padding bits.

In an embodiment, the padding bits are predetermined or indicate a CSI report quantity previously reported.

In an embodiment, the padding bits indicate an estimated CSI report quantity.

In an embodiment, a CSI report quantity derived from the OD-SSB includes at least one of an SSB reference signal received power, SSB-RSRP, and an SSB signal to interference plus noise ratio, SSB-SINR.

In an embodiment, the CSI report configuration includes at least one of a periodic CSI, P-CSI, report configuration, a semi-persistent CSI, SP-CSI, report configuration, and an aperiodic CSI, AP-CSI, report configuration.

In an embodiment, the CSI resources other than the OD-SSB include a CSI reference signal, CSI-RS.

According to a fourth aspect, provided is a method for a base station, comprising: transmitting a channel state information, CSI, report configuration indicating a CSI resource list including an on-demand synchronization signal block, OD-SSB; transmitting an OD-SSB availability indicator indicating whether or not the OD-SSB is available; and performing CSI report reception according to the CSI report configuration, wherein at least one of the following operations is performed, when the OD-SSB is not available (i) suspending the CSI report reception as long as the OD-SSB is not available, (ii) deactivating the CSI report reception, (iii) performing CSI report reception, wherein respective CSI reports include CSI report quantities derived only from CSI resources other than the OD-SSB, and (iv) performing CSI report reception, wherein portions of respective CSI reports dedicated for reporting a CSI report quantity derived from the OD-SSB include data other than said CSI report quantity.

For example, the operations (i) to (iv) may include controlling a transceiver to perform respective operations.

In an embodiment, the method comprises transmitting an SSC availability indicator indicating that the OD-SSB is available; and activating CSI report reception.

In an embodiment, the method comprises transmitting a CSI reporting setting indicating whether CSI reporting is to be resumed when the OD-SSB becomes available.

In an embodiment, the method comprises transmitting a resume trigger; and resuming the CSI report reception when the OD-SSB becomes available and the resume trigger is transmitted.

In an embodiment, the CSI report configuration includes a CSI report sub-configuration indicating a CSI resource list not including the OD-SSB; and the method comprises performing CSI report reception according to the CSI-sub-configuration when the OD-SSB is not available.

In an embodiment, the method comprises transmitting a CSI SSB unavailability configuration indicating an operation to be performed when the OD-SSB is not available.

In an embodiment, the method comprises transmitting a CSI SSB availability configuration indicating an operation to be performed when the OD-SSB becomes available.

In an embodiment, the method comprises suspending the CSI report reception when the OD-SSB is not available and the CSI resource list includes the OD-SSB and CSI resources other than the OD-SSB; and deactivating the CSI report reception when the OD-SSB is not available and the CSI resource list includes only the OD-SSB.

In an embodiment, the method comprises performing the CSI report reception when the OD-SSB is not available, wherein portions of CSI reports dedicated for reporting a CSI report quantity derived from the OD-SSB include padding bits.

In an embodiment, the padding bits are predetermined or indicate a CSI report quantity previously reported.

In an embodiment, the padding bits indicate an estimated CSI report quantity.

In an embodiment, a CSI report quantity derived from the OD-SSB includes at least one of an SSB reference signal received power, SSB-RSRP, and an SSB signal to interference plus noise ratio, SSB-SINR.

In an embodiment, the CSI report configuration includes at least one of a periodic CSI, P-CSI, report configuration, a semi-persistent CSI, SP-CSI, report configuration, and an aperiodic CSI, AP-CSI, report configuration.

In an embodiment, the CSI resources other than the OD-SSB include a CSI reference signal, CSI-RS.

According to a fifth aspect, provided is an integrated circuit for controlling a communication apparatus, the integrated circuit comprising: transceiver circuitry which, in operation, receives a channel state information, CSI, report configuration indicating a CSI resource list including an on-demand synchronization signal block, OD-SSB, and monitors CSI resources included in the CSI resource list; and control circuitry which, in operation, derives at least one CSI report quantity from received CSI resources, and performs CSI reporting according to the CSI report configuration, wherein the control circuitry, in operation, determines whether or not the OD-SSB is available and performs at least one of the following operations, when it is determined that the OD-SSB is not available: (i) suspending the CSI reporting as long as the OD-SSB is not available, (ii) deactivating the CSI reporting, (iii) performing an error operation, (iv) performing CSI reporting, wherein respective CSI reports include CSI report quantities derived only from CSI resources other than the OD-SSB, and (v) performing CSI reporting, wherein portions of respective CSI reports dedicated for reporting a CSI report quantity derived from the OD-SSB include data other than said CSI report quantity.

According to an embodiment, the control circuitry, in operation, activates CSI reporting when the OD-SSB becomes available.

According to an embodiment, the control circuitry, in operation, determines whether or not the CSI reporting is resumed when the OD-SSB becomes available, according to a CSI reporting setting

According to an embodiment, the transceiver circuitry, in operation, receives a resume trigger; and the control circuitry, in operation, resumes the CSI reporting when the OD-SSB becomes available and the resume trigger is received.

According to an embodiment, the CSI report configuration includes a CSI report sub-configuration indicating a CSI resource list not including the OD-SSB; and the control circuitry, in operation, performs CSI reporting according to the CSI-sub-configuration when is determined that the OD-SSB is not available.

According to an embodiment, the transceiver circuitry, in operation, receives a CSI SSB unavailability configuration indicating an operation to be performed when it is determined that the OD-SSB is not available.

According to an embodiment, the transceiver circutiry, in operation, receives a CSI SSB availability configuration indicating an operation to be performed when the OD-SSB becomes available.

According to an embodiment, the control circuitry, in operation, suspends the CSI reporting when it is determined that the OD-SSB is not available and the CSI resource list includes the OD-SSB and CSI resources other than the OD-SSB; and the control circuitry, in operation, deactivates the CSI reporting when it is determined that the OD-SSB is not available and the CSI resource list includes only the OD-SSB.

According to an embodiment, the control circuitry, in operation, performs the CSI reporting when it is determined that the OD-SSB is not available, wherein portions of CSI reports dedicated for reporting a CSI report quantity derived from the OD-SSB include padding bits.

According to an embodiment, the padding bits are predetermined or indicate a CSI report quantity previously reported.

According to an embodiment, the control circuitry, in operation, when it is determined that the OD-SSB is not available, estimates a corresponding CSI report quantity; and the padding bits indicate the estimated CSI report quantity.

According to an embodiment, a CSI report quantity derived from the OD-SSB includes at least one of an SSB reference signal received power, SSB-RSRP, and an SSB signal to interference plus noise ratio, SSB-SINR.

According to an embodiment, the CSI report configuration includes at least one of a periodic CSI, P-CSI, report configuration, a semi-persistent CSI, SP-CSI, report configuration, and an aperiodic CSI, AP-CSI, report configuration.

According to an embodiment, the CSI resources other than the OD-SSB include a CSI reference signal, CSI-RS.

According to a sixth aspect, provided is an integrated circuit for controlling a base station, the integrated circuit comprising: transceiver circuitry which, in operation, transmits a channel state information, CSI, report configuration indicating a CSI resource list including an on-demand synchronization signal block, OD-SSB; and control circuitry which, in operation, performs CSI report reception according to the CSI report configuration, wherein the control circuitry, in operation performs at least one of the following operations, when the OD-SSB is not available (i) suspending the CSI report reception as long as the OD-SSB is not available, (ii) deactivating the CSI report reception, (iii) performing CSI report reception, wherein respective CSI reports include CSI report quantities derived only from CSI resources other than the OD-SSB, and (iv) performing CSI report reception, wherein portions of respective CSI reports dedicated for reporting a CSI report quantity derived from the OD-SSB include data other than said CSI report quantity.

For example, the operations (i) to (iv) may include controlling the transceiver circuitry to perform respective operations.

In an embodiment, the transceiver circuitry, in operation, transmits an OD-SSB availability indicator indicating whether or not the OD-SSB is available.

In an embodiment, the transceiver circuitry, in operation, transmits an SSC availability indicator indicating that the OD-SSB is available; and the control circuitry, in operation, activates CSI report reception.

In an embodiment, the transceiver circuitry, in operation, transmits a CSI reporting setting indicating whether CSI reporting is to be resumed when the OD-SSB becomes available.

In an embodiment, the transceiver circuitry, in operation, transmits a resume trigger; and the control circuitry, in operation, resumes the CSI report reception when the OD-SSB becomes available and the resume trigger is transmitted.

In an embodiment, the CSI report configuration includes a CSI report sub-configuration indicating a CSI resource list not including the OD-SSB; and the control circuitry, in operation, performs CSI report reception according to the CSI-sub-configuration when the OD-SSB is not available.

In an embodiment, the transceiver circuitry, in operation, transmits a CSI SSB unavailability configuration indicating an operation to be performed when the OD-SSB is not available.

In an embodiment, the transceiver circuitry, in operation, transmits a CSI SSB availability configuration indicating an operation to be performed when the OD-SSB becomes available.

In an embodiment, the control circuitry, in operation, suspends the CSI report reception when the OD-SSB is not available and the CSI resource list includes the OD-SSB and CSI resources other than the OD-SSB; and the control circuitry, in operation, deactivates the CSI report reception when the OD-SSB is not available and the CSI resource list includes only the OD-SSB.

In an embodiment, the control circuitry, in operation, performs the CSI report reception when the OD-SSB is not available, wherein portions of CSI reports dedicated for reporting a CSI report quantity derived from the OD-SSB include padding bits.

In an embodiment, the padding bits are predetermined or indicate a CSI report quantity previously reported.

In an embodiment, the padding bits indicate an estimated CSI report quantity.

In an embodiment, a CSI report quantity derived from the OD-SSB includes at least one of an SSB reference signal received power, SSB-RSRP, and an SSB signal to interference plus noise ratio, SSB-SINR.

In an embodiment, the CSI report configuration includes at least one of a periodic CSI, P-CSI, report configuration, a semi-persistent CSI, SP-CSI, report configuration, and an aperiodic CSI, AP-CSI, report configuration.

In an embodiment, the CSI resources other than the OD-SSB include a CSI reference signal, CSI-RS.

According to a seventh aspect, provided is a computer-readable medium comprising instructions which, when executed by a communication apparatus, causes the communication apparatus to carry out the steps of any method according to the second aspect and its embodiments/variations.

According to an eighth aspect, provided is a computer-readable medium comprising instructions which, when executed by a base station, causes the base station to carry out the steps of any method according to the fourth aspect and its embodiments/variations.

## Claims

1. A communication apparatus, comprising:
a transceiver which, in operation,
receives a channel state information, CSI, report configuration indicating a CSI resource list including an on-demand synchronization signal block, OD-SSB, and
monitors CSI resources included in the CSI resource list; and
circuitry which, in operation,
derives at least one CSI report quantity from received CSI resources, and
performs CSI reporting according to the CSI report configuration, wherein
the circuitry, in operation, determines whether or not the OD-SSB is available and performs at least one of the following operations, when it is determined that the OD-SSB is not available:
- suspending the CSI reporting as long as the OD-SSB is not available,
- deactivating the CSI reporting,
- performing an error operation,
- performing CSI reporting, wherein respective CSI reports include CSI report quantities derived only from CSI resources other than the OD-SSB, and
- performing CSI reporting, wherein portions of respective CSI reports dedicated for reporting a CSI report quantity derived from the OD-SSB include data other than said CSI report quantity.

2. The communication apparatus according to claim 1, wherein
the circuitry, in operation, activates CSI reporting when the OD-SSB becomes available.

3. The communication apparatus according to claim 1, wherein
the circuitry, in operation, determines whether or not the CSI reporting is resumed when the OD-SSB becomes available, according to a CSI reporting setting.

4. The communication apparatus according to claim 1, wherein
the transceiver, in operation, receives a resume trigger; and
the circuitry, in operation, resumes the CSI reporting when the OD-SSB becomes available and the resume trigger is received.

5. The communication apparatus according to claim 1, wherein
the CSI report configuration includes a CSI report sub-configuration indicating a CSI resource list not including the OD-SSB; and
the circuitry, in operation, performs CSI reporting according to the CSI-sub-configuration when is determined that the OD-SSB is not available.

6. The communication apparatus according to any one of claims 1 to 5, wherein
the transceiver, in operation, receives a CSI SSB unavailability configuration indicating an operation to be performed when it is determined that the OD-SSB is not available.

7. The communication apparatus according to any one of claims 1 to 6, wherein
the transceiver, in operation, receives a CSI SSB availability configuration indicating an operation to be performed when the OD-SSB becomes available.

8. The communication apparatus according to any one of claims 1 to 6, wherein
the circuitry, in operation, suspends the CSI reporting when it is determined that the OD-SSB is not available and the CSI resource list includes the OD-SSB and CSI resources other than the OD-SSB; and
the circuitry, in operation, deactivates the CSI reporting when it is determined that the OD-SSB is not available and the CSI resource list includes only the OD-SSB.

9. The communication apparatus according to any one of claims 1 to 8, wherein
the circuitry, in operation, performs the CSI reporting when it is determined that the OD-SSB is not available, wherein
portions of CSI reports dedicated for reporting a CSI report quantity derived from the OD-SSB include padding bits.

10. The communication apparatus according to claim 9, wherein
the padding bits are predetermined or indicate a CSI report quantity previously reported.

11. The communication apparatus according to claim 9, wherein
the circuitry, in operation, when it is determined that the OD-SSB is not available, estimates a corresponding CSI report quantity; and
the padding bits indicate the estimated CSI report quantity.

12. The communication apparatus according to any one of claims 1 to 11,
wherein a CSI report quantity derived from the OD-SSB includes at least one of an SSB reference signal received power, SSB-RSRP, and an SSB signal to interference plus noise ratio, SSB-SINR.

13. The communication apparatus according to any one of claims 1 to 12, wherein the CSI report configuration includes at least one of a periodic CSI, P-CSI, report configuration, a semi-persistent CSI, SP-CSI, report configuration, and an aperiodic CSI, AP-CSI, report configuration.

14. The communication apparatus according to any one of claims 1 to 13, wherein the CSI resources other than the OD-SSB include a CSI reference signal, CSI-RS.

15. A method for a communication apparatus, comprising
receiving a channel state information, CSI, report configuration indicating a CSI resource list including an on-demand synchronization signal block, OD-SSB;
monitoring CSI resources included in the CSI resource list;
deriving at least one CSI report quantity from received CSI resources; and
performing CSI reporting according to the CSI report configuration, wherein
it is determined whether or not the OD-SSB is available; and
at least one of the following operations is performed, when it is determined that the OD-SSB is not available:
- suspending the CSI reporting as long as the OD-SSB is not available,
- deactivating the CSI reporting,
- performing an error operation,
- performing CSI reporting, wherein respective CSI reports include CSI report quantities derived only from CSI resources other than the OD-SSB, and
- performing CSI reporting, wherein portions of respective CSI reports dedicated for reporting a CSI report quantity derived from the OD-SSB include data other than said CSI report quantity.
